# EUROPEAN PATENT SPECIFICATION

(11) **EP 4 051 013 B1**
(45) Date of publication and mention of the grant of the patent: **18.10.2023**
(21) Application number: 20796602.9
(22) Date of filing: 29.10.2020
(51) Int. Cl.: A23L 7/109, A23P 30/20

(54) **PROCESS FOR THE PRODUCTION OF A PASTA FOOD PRODUCT BY EXTRUSION THROUGH AN INSERT MADE OF POLYACETAL RESIN AND RELATED PRODUCT**
VERFAHREN ZUR PRODUKTION EINES TEIGWARENPRODUKTES DURCH EXTRUSION DURCH EINEN EINSATZ AUS POLYACETALHARZ UND ZUGEHÖRIGES PRODUKT
PROCÉDÉ DE PRODUCTION D'UN PRODUIT ALIMENTAIRE DE TYPE PÂTES PAR EXTRUSION À TRAVERS UN INSERT CONSTITUÉ DE RÉSINE DE POLYACÉTAL ET PRODUIT ASSOCIÉ

(30) Priority: 30.10.2019 IT 201900020048
(43) Date of publication of application: 07.09.2022
(73) Proprietor: BARILLA G. e R. Fratelli S.p.A., 43100 Parma (IT)
(72) Inventor: PANTO', Francesco, 43125 Parma (IT); BARBA, Francesco, 43015 Noceto (PR) (IT); PIZZABIOCCA, Flavia, 00053 Civitavecchia (RM) (IT); BARDIANI, Italo, 43123 Parma (IT); SOTTILI, Ugo Cesare, 46010 Marcaria (MN) (IT); CASSOTTA, Fabrizio, 26900 Lodi (IT)
(74) Representative: Botti & Ferrari S.p.A.
(86) International application number: PCT/EP2020/080355
(87) International publication number: WO 2021/083990

(56) References cited:
- EP-A1- 0 203 321
- EP-A1- 1 214 890
- EP-A1- 1 297 754
- EP-A1- 2 687 099
- EP-A1- 2 862 452
- US-A- 4 044 165
- US-A- 5 139 806

## Description

### Field of application

The present invention relates to a process for the production of a pasta food product, for example durum wheat semolina pasta, obtained by extrusion of a dough through a die plate insert.

Specifically, this process provides for the preparation of a food product by extrusion of a dough through a die plate insert made of a polyacetal resin.

The present invention also relates to a food product of the above type, i.e. durum wheat semolina pasta or a similar product, such as pasta sheets or foils, obtained by this process.

### Prior art

Different types of die plates and extrusion techniques for the production of pasta food products, among which durum wheat semolina pasta, are known in the art.

In Italy, the "durum wheat semolina pasta" and the "durum wheat semolato pasta" are the products obtained by the extrusion or lamination and following drying of doughs respectively and exclusively prepared with durum wheat semolina and semolatos and water (Law 580/67).

Pasta extrusion represents a critical step in pasta production, since it determines the shape and thickness of the finished product, but it also allows specific surface roughness features to be conferred thereto.

Normally, the step of extruding occurs by letting a dough pass through inserts made of brass, bronze or polytetrafluoroethylene (PTFE, also known with the trade name Teflon).

The extrusion through inserts made of PTFE allows a compact pasta and with a smooth surface to be obtained, which, once cooked, has a good consistency on the palate, in particular a good "al dente" firmness upon cooking.

As it is known, the consumer generally likes to eat pasta or similar food products so cooked as to be easily chewable and digestible, but still provided with some consistency during chewing.

On the other hand, the pasta obtained by extrusion through inserts made of PTFE has a smooth surface which - after a traditional cooking in boiling water - causes an adhesion of the dressing sauce thereto being lower than that of pasta extruded through inserts made of different materials, for example metals such as bronze.

The extrusion through inserts made of bronze or other metals provided with a good surface roughness allows to obtain pasta having a handcrafted look, because of the clearly more porous and opaquer surface.

In this case, once the pasta is cooked, a rough and porous surface is observed, which allows a good adhesion of the sauce, as well as a pleasant roughness feeling on the palate.

However, the bronze-extruded pasta has generally an "al dente" firmness upon cooking, which is lower than that of the pasta extruded through inserts made of different materials, for example PTFE, and sometimes it rapidly loses its consistency when the recommended cooking time (as indicated on the package) is exceeded, even slightly.

Another problem found in the use of inserts for extruding pasta is wear over time: this phenomenon determines several drawbacks among which a widening of the die opening and a decrease in the friction between the insert itself and the dough; in particular, the friction decrease causes a finished product with suboptimal roughness features to be obtained.

In order to ensure a product with homogeneous qualitative features over time, the inserts once worn out are normally disassembled and replaced with new inserts. This operation causes a considerable cost in terms of plant control and maintenance, as well as of interruption and shutdown of the production line.

Polyoxymethylene (POM), commonly called acetal resin, is a semicrystalline thermoplastic material with a good mechanical strength and stiffness, good flowability features and an excellent wear resistance, besides a low moisture absorption.

Right due to its mechanical resistance features, the use of polyoxymethylene for making die plate inserts in the food sector is known.

However, the use of die plate inserts made of polyoxymethylene leads to obtaining a pasta with features which are similar to those of bronze-extruded pasta, i.e. characterized by a high surface porosity and roughness, which are features to be controlled in the finished product, as highlighted above.

EP2687099 discloses a die plate insert for the extrusion of noodles or pasta, having a specific value of contact angle and water absorption, which can be made of a plurality of synthetic resins, which are even very different from each other, among which the polyacetal resin.

The problem that EP2687099 proposes to solve is to obtain a die plate insert which ensures a friction between the surface of the insert itself and the dough to be extruded which is steady over time, i.e. which does not increase or decrease with use.

In the description it is specified that the use of a synthetic resin would make the control of the surface roughness of the pasta being produced easier; in particular, the polyacetal resin sold with the trade name DURACON is mentioned.

Among the quoted examples, the extrusion of a dough for the production of durum wheat semolina pasta by using inserts made of a mixture of DURACON and polyethylene, in variable proportions, or by using inserts made of a mixture of DURACON and Teflon, is described.

As shown by the examples, when inserts made of materials having values of contact angle and water absorption outside predetermined ranges are used, with the increase in the hours of use, the friction forces between the insert and the dough would change, which would cause a finished product to be obtained, with different roughness features with respect to the finished product obtained by using a new insert of the same type.

However, EP2687099 does not tackle the problem of providing a process for the production of a pasta food product having such specific features of surface porosity or surface roughness as to ensure a good dressing absorption once cooked and, in the meantime, which is provided with a good firmness upon cooking. EP2862452 describes fresh pastas which can be stored in a frozen state for a long time and which retain favorable appearance and texture comparable to freshly boiled fresh pastas even after being thawed are provided.

Therefore, as far as the technologies known in the art propose to make inserts with materials ensuring a good wear resistance, it is still very felt the need to provide a process for the production of a pasta food product, which has a surface roughness higher than that of the pasta obtained by extrusion through an insert made of PTFE and, in the meantime, a consistency firmness upon cooking higher than that of a pasta obtained by bronze extrusion.

In short, the technical problem underlying the present invention was to provide a process for the production of a pasta food product, which allows a finished product to be obtained, having roughness features intermediate between the roughness of the PTFE-extruded pasta and that of the bronze-extruded pasta, as well as provided with a good consistency firmness upon cooking, thus overcoming the above-quoted prior art problems.

### Summary of the invention

This technical problem was solved, according to the invention, by a process for the production of a pasta food product, which comprises the following steps:
a) mixing water and a meal which is suitable for producing pasta, so as to obtain a dough with a water content comprised between 35% and 37.5% by weight of the total weight of said dough;
b) kneading said dough;
c) extruding the kneaded dough by extrusion through a die plate insert made of polyoxymethylene copolymer (POM-C);
d) drying said extruded dough, so as to obtain a pasta food product with a predetermined moisture content.

Preferably, in the step a) of mixing, a dough with a water content comprised between 36% and 37.1% by weight of the total weight of the dough, more preferably between 36.7% and 37% by weight of the total weight of the dough, is obtained.

In an entirely preferred manner, in this step a) of mixing a dough with a water content equal to about 37% by weight of the total weight of the dough is obtained.

Preferably, pursuant to the present invention the expression "meal which is suitable for producing pasta" means more commonly a cereal flour or semolina, more preferably durum wheat semolina or semolato. In accordance with alternative embodiments of the present invention this meal can be a meal comprising a flour of possibly precooked, peeled legumes, or a mixture of the latter with a cereal flour or semolina, wherein said flour of possibly precooked, peeled legumes, can be a flour of one or more legumes selected between peas, fava beans, lentils, chickpeas and mixtures thereof, preferably a flour of lentils and/or chickpeas.

In particular, pursuant to the present invention the term "pasta" will be used with reference to a product which is entirely similar to the "durum wheat semolina pasta", as defined in the legislation mentioned in the prior art, as for moisture content, consistency and cooking times, although not complying with the requirements of said legislation, which provides the use of this name only for products containing at least 50% of durum wheat semolina.

Pursuant to the present invention, the term "mix" or "mixing" means a step of mixing, under the action of a mechanical element which is suited to the purpose, carried out under prefixed air temperature and moisture conditions, wherein the selected ingredients, among which said meal and water, are mixed with subsequent hydration of the starch and possible formation of gluten, until a homogeneous and elastic dough having the specified moisture content is formed.

Pursuant to the present invention, the term "kneading" means a step in which the dough is processed until an optimum consistency and plasticity is obtained.

Pursuant to the present invention, the above-mentioned steps a), b) and c) of mixing, kneading and extruding can be carried out inside the same unit, i.e. using the same extruder.

Advantageously, due to the step a) of mixing, in which a dough with a well-determined water content is produced, as well as due to the step c) of extruding, in which a die plate insert is used with specific surface features, conferred by the material which the insert is made of, i.e. polyoxymethylene copolymer, the process according to the present invention allows pasta with an optimum surface roughness and provided with an amazing "al dente" firmness upon cooking to be produced.

Specifically, as it will be shown hereafter with reference to the detailed description, the present process allows a pasta to be produced with an intermediate surface roughness between that of the pasta extruded through an insert made of polytetrafluoroethylene and that of the bronze-extruded pasta.

Conveniently, the pasta food product which can be obtained following this step d) of drying has a surface roughness Ra comprised between 3.5 µm and 6 µm, preferably between 4.5 µm and 5.7 µm, calculated in accordance with the method ISO 16610-21.

Advantageously, a pasta food product having these surface roughness values Ra allows a good adhesion of the sauce with which this pasta food product, once cooked as is tradition, is dressed.

Specifically, these surface roughness values Ra cause a good adhesion also of particularly fluid and watery sauces, such as tomato-based sauces.

Moreover, as it will be seen hereafter with reference to the detailed description, once traditionally cooked in boiling water, the pasta food product obtained by the present process has improved features of consistency and "al dente" firmness upon cooking with respect to a similar product obtained by extrusion through an insert made of bronze.

Preferably, the above-mentioned step a) of mixing is carried out at a temperature comprised between 20°C and 50°C, more preferably between 30°C and 40°C, for a time comprised between 20 minutes and 30 minutes.

Yet the step a) of mixing can be carried out by rotating the at least one screw of said extruder at a speed comprised between 15 rpm and 25 rpm.

In an equally preferred manner, in the above-mentioned step c) of extruding, the die plate insert is made of polyoxymethylene copolymer having an impact resistance with a notch comprised between 7 and 10 kJ/m, more preferably between 7.5 kJ/m and 8.5 kJ/m, according to the method DIN EN ISO 179-1eA (for the Charpy test; max. 7.5 J; support distance 64 mm, normed specimen).

Preferably, the step c) of extruding is carried out under partial vacuum conditions, more preferably at a pressure comprised between -500 mmHg and -700 mmHg, more preferably between -600 mmHg and -670 mmHg, still more preferably between -600 mmHg and -650 mmHg.

As partially mentioned above, according to a preferred embodiment of the present process, the step c) of extruding can be carried out by means of an extruder, specifically an extruder comprising at least one endless screw, which is capable of moving the above-mentioned dough towards the above-mentioned insert, wherein this endless screw is rotated at a speed comprised between 15 rpm and 25 rpm.

Preferably, during the above-mentioned step d) of drying a pasta food product with a moisture content lower or equal to 12.5% by weight, more preferably comprised between 10% and 12% by weight, still more preferably comprised between 10% and 11% by weight, of the total weight of the food product, is obtained.

Advantageously, the process according to the present invention ensures the production of a food product with moisture features which allow it to be preserved for a long period, being equal to at least 6 months, preferably at least 12 months, at room temperature and in a fresh and dry environment.

Preferably, the step d) of drying is carried out at a temperature comprised between 50°C and 90°C, more preferably between 70°C and 85°C.

In an equally preferred manner, the step d) of drying can be preceded by at least one step of partial surface drying or "desiccating", during which the extruded dough is partially dried on its surface by application of a hot air flow, this hot air flow preferably having a temperature comprised between 50°C and 90°C.

The above-mentioned technical problem is also solved by a pasta food product obtainable by the process according to the present invention, having a surface roughness Ra comprised between 3.5 µm and 6 µm, preferably between 4.5 µm and 5.7 µm, calculated in accordance with the procedure ISO 16610-21, and a moisture content lower or equal to 12.5%, preferably comprised between 10% and 12%, more preferably comprised between 10% and 11%, by weight on its total weight.

This pasta food product is dried pasta or preferably a sheet of dried pasta.

More preferably, this pasta food product is durum wheat semolina dried pasta.

Advantageously, the pasta food product according to the present invention benefits from the features of roughness and "al dente" firmness upon cooking discussed above with reference to the process of the present invention and, once traditionally cooked in boiling water, it is particularly suitable for retaining sauces and dressings on its surface, in a certainly more performing manner with respect to pasta that has been Teflon-extruded and cooked according to the same modes, and it also has a good consistency on the palate, higher than that of the bronze-extruded pasta. The present invention is further described hereafter in the detailed description, with reference to some exemplary embodiments provided hereafter by way of illustrative example.

### Brief description of the figures

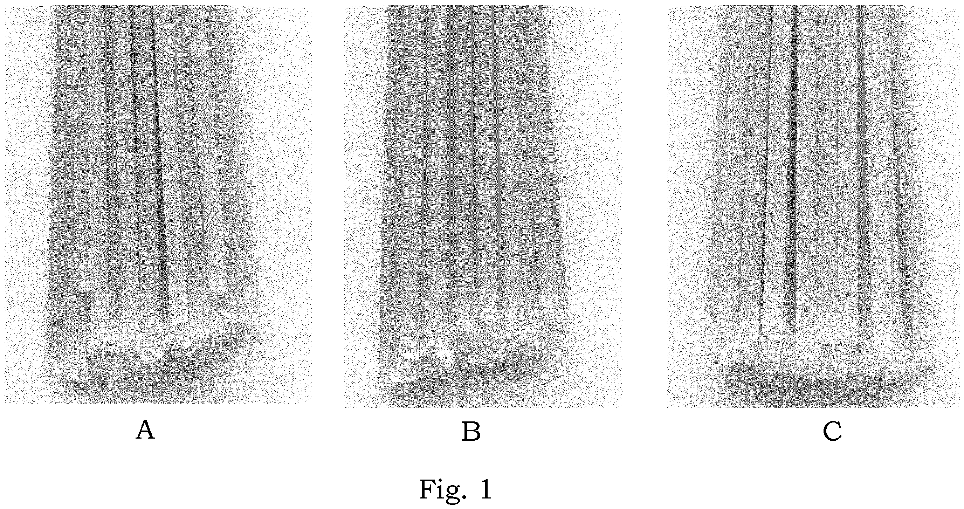

Figure 1 shows three different types of pasta, of which a first type of pasta obtained by the process according to the present invention (Fig. 1, A), a second type of pasta, obtained by Teflon extrusion (Fig. 1, B), and a third type of pasta (Fig. 1, C), obtained by bronze extrusion.

### Detailed description

As hinted to above, the process according to the present invention proved to be particularly effective in the production of a pasta food product, with specific surface roughness features.

In particular, according to a preferred embodiment and with reference to the following examples, the present process allows durum wheat semolina pasta to be obtained with a surface roughness Ra comprised between values which are normally obtained by extrusion of a dough of semolina and water through a die plate insert made of Teflon and the values which are obtained by extrusion of the same dough through a die plate insert made of bronze.

As it is known, Teflon-extruded pasta has a surface roughness value Ra which is generally around 1 µm, while bronze-extruded pasta has a surface roughness value Ra comprised between about 7 µm and about 9 µm.

Advantageously, as mentioned above with reference to the summary, the present process allows a finished product to be obtained with a surface roughness value Ra comprised between about 3.5 µm and about 6 µm.

### Example 1a - Process for the production of pasta according to the invention

In a process carried out continuously, when carrying out the step a) of mixing of the present process, 3705 kg of durum wheat semolina, having a moisture comprised between 13.5% and 15.5% by weight, and 1371 kg of water were fed into a two-screw extruder.

After mixing, the whole water content in the dough was equal to 37% by weight of the total weight of the dough.

The extruder being used, supplied by the company Pavan, was suitably equipped with a die plate insert made of polyoxymethylene copolymer of the Tecaform AH type, produced by the company Ensinger.

The dough was subjected to stirring by rotating the extruder screws so as to carry out at first the step a) of mixing, then the step b) of kneading, by means of the same tool.

During the step a) of mixing, the extruder screws were rotated at a speed of 20 rpm for a time equal to about 25 minutes.

Afterwards, the step c) of extruding was carried out by extruding the dough through the insert made of polyoxymethylene copolymer under partial vacuum conditions, more precisely at a pressure equal to -660 mmHg.

The continuous thread of the thus extruded dough for the production of spaghettis was cut and immediately subjected to a first step of desiccating, by application of a hot air flow, as soon as it was deposited.

The subsequent steps of desiccating and a step of drying inside an entirely conventional continuous drier with multiple zones, arranged at a temperature comprised between about 70°C and 85°C degrees, followed.

Finally, the thus obtained dried pasta according to the process of the present invention was cooled.

The moisture content in the so-obtained dried pasta was equal to 10.5% by weight of its total weight.

The product had a pale and slightly opaque yellow colour.

### Example 1b - Process for the production of pasta not according to the invention

Two different dough portions were prepared by mixing durum wheat semolina and water.

A first dough portion was obtained by mixing 4000 kg of durum wheat semolina (the same lot of semolina used in Example 1a), having a moisture comprised between 13.5 % and 15.5 % by weight, with 1360 kg of water, obtaining a dough with an overall water content equal to 34% by weight of its total weight.

A second dough portion was obtained by mixing 3100 kg of durum wheat semolina (the same lot of semolina used in Example 1a), having a moisture comprised between 13.5% and 15,5% by weight, with 1029 kg of water, obtaining a dough with an overall water content equal to 33.2% by weight of its total weight.

From the first dough portion and from the second dough portion a first variety of pasta not according to the invention and a second variety of pasta not according to the invention were respectively obtained, wherein the first one was obtained by extrusion through an insert made of Teflon and the second one by extrusion through an insert made of bronze.

As it is evident from the following Table 1, the process for the production of the first variety of pasta and of the second variety of pasta not according to the invention, respectively, was performed adopting steps and technical specifications which were identical to those adopted for the process of Example 1a.

The Teflon-extruded pasta had a yellowish colour and a clearly smooth and bright outer surface. In contrast, the bronze-extruded pasta had a straw yellow colour and it was totally opaque.

### Process parameters and comparative evaluation between pasta according to Example 1a and pasta according to Example 1b

It is hereafter reported Table 1, in which the process parameters of the procedures carried out in Examples 1a and 1b, as well as the moisture contents of the so-obtained products, are quoted, as said above.

**Table 1 (Consistency = Pressure measured at the extrusion head)**

| | | Example 1a | Example 1b | |
|---|---|---|---|---|
| Type of pasta | | According to the invention | First type not according to the invention | Second type not according to the invention |
| Insert material | | POM C | Teflon | Bronze |
| Semolina | kg/h | 3705 | 4000 | 3100 |
| Semolina moisture | % | 13.5 - 15.5 | 13.5 - 15.5 | 13.5 - 15.5 |
| Dough moisture | % | 37 | 34 | 33.2 |
| Vacuum-seal (pump power) | kW | 2100 | 2100 | 2100 |
| Dough temperature | °C | 40 | 40 | 40 |
| Consistency | bar | 83 | 105 | 102 |
| Screws speed | rpm | 20 | 20 | 19 |
| Vacuum | mm/Hg | -660 | -660 | -660 |
| Final product moisture | % | 10.5 | 10.5 | 10.5 |

Afterwards, the final features of the different types of pasta, as obtained according to Examples 1a and 1b, were calculated. At first the product surface roughness was calculated according to the experimental method ISO 16610-21.

The surface roughness Ra, the surface roughness Rz and the roughness Rtot, i.e. the maximum distance between the highest peak and the deepest trough in the examined surface length, were also calculated.

As it is known, these three parameters as a whole exhaustively describe the product surface shape.

Afterwards, the product consistency after cooking for 13 minutes in unsalted boiling water was calculated. The analysis was carried out by the procedure TPA2, Texture Profile Analysis, according to the experimental method AACCI Method 66-50.01 ("Pasta and Noodle Cooking Quality") which is capable of determining the force imparted by a wedge, which is needed for the total compression, i.e. the compression by 90% of the cooked product.

The experimental results found are listed in the following Table 2.

**Table 2**

| **Type of sample** | **F90 (N)** | **Norm. F90 (N/mm)** | **Roughness Ra (µm)** | **Roughness Rz (µm)** | **Roughness Rtot (µm)** |
|---|---|---|---|---|---|
| POM C (Ex. 1a) | 12.44 | 7.02 | 5.65 | 38.16 | 50.63 |
| TEFLON STD (Ex. 1b) | 17.92 | 7.6 | 1.13 | 7.47 | 10.32 |
| BRONZE (Ex. 1b) | 15.13 | 6.27 | 7.52 | 43.24 | 55.97 |

As it is evident, the pasta obtained in accordance with the present process, i.e. according to Example 1a, had a surface roughness Ra equal to 5.65 µm, i.e. an entirely satisfactory roughness Ra, which is intermediate between that of Teflon-extruded pasta being equal to 1.13 µm and that of bronze-extruded pasta being equal to 7.52 µm.

In addition, following cooking and analysis by the procedure TPA2, the pasta obtained according to Example 1a showed absolutely optimum consistency values, comparable to those of the Teflon-extruded pasta, obtained according to Example 1b.

The normalized F90 value calculated for the pasta obtained in Example 1a was equal to 7.02 N/mm, where 7.6 N/mm was the normalized F90 value calculated for the Teflon-extruded pasta of Example 1b and 6.27 N/mm the normalized F90 value for the bronze-extruded pasta.

The experimental values calculated with reference to the consistency of the pasta obtained in Example 1a were also confirmed by a taste test from which it emerged that the consistency on the palate of the pasta obtained in Example 1a, once traditionally cooked in boiling water, was slightly lower or comparable to that of the Teflon-extruded pasta obtained in Example 1b.

### Example 2 - Process for the production of pasta not according to the invention

Two different dough portions were prepared by mixing durum wheat semolina and water.

A first dough portion was obtained by mixing 3705 kg of durum wheat semolina (the same lot of semolina used in Example 1a), having a moisture comprised between 13.5 % and 15.5 % by weight, with 1263 kg of water, obtaining a dough with an overall water content equal to 34.1% by weight of its total weight.

A second dough portion was obtained by mixing 3560 kg of durum wheat semolina (the same lot of semolina used in Example 1a), having a moisture comprised between 13.5% and 15.5% by weight, with 1221 kg of water, obtaining a dough with an overall water content equal to 34.3% by weight of its total weight.

From the first dough portion and from the second dough portion a third variety of pasta not according to the invention and a fourth variety of pasta not according to the invention were respectively obtained, wherein the third variety of pasta was obtained by extrusion through an insert made of POM-C, which is identical to the insert used in Example 1a and the fourth variety of pasta by extrusion through an insert made of Teflon, which is identical to the insert used in Example 1b.

As it is evident from the following Table 3, the process for the production of the third variety of pasta and the fourth variety of pasta not according to the invention, respectively, was performed adopting steps and technical specifications which were entirely similar to each other.

### Process parameters and evaluation of the roughness of the different types of pasta not according to the invention obtained in Example 2

It is hereafter reported Table 3, in which the process parameters of the procedures carried out in Example 2, as well as the moisture contents of the so-obtained products, are quoted.

**Table 3 (Consistency = Pressure measured at the extrusion head)**

| Type of pasta | | Third type not according to the invention | Fourth type not according to the invention |
|---|---|---|---|
| Insert material | | POM C | TEFLON |
| Semolina | kg/h | 3705 | 3561 |
| Semolina moisture | % | 13.5 - 15.5 | 13.5 - 15.5 |
| Dough moisture | % | 34.1 | 34.3 |
| Vacuum-seal (pump power) | Kw | 2100 | 2100 |
| Dough temperature | °C | 39 | 37.1 |
| Consistency | Bar | 105 | 105 |
| Screw speed | rpm | 19.5 | 19.5 |
| Vacuum | mm/Hg | -660 | -660 |
| Final product moisture | % | 10.5 | 10.5 |

Afterwards, the final features of the different types of pasta, as obtained in Example 2, were calculated.

At first the surface roughness of the pasta was calculated according to the experimental method ISO16610-21.

The surface roughness Ra, the surface roughness Rz and the roughness Rtot were calculated.

The so-obtained experimental results are listed in the following Table 4.

**Table 4**

| **Type of sample** | **Roughness Ra (µm)** | **Roughness Rz (µm)** | **Roughness Rtot (µm)** |
|---|---|---|---|
| POM C | 6.83 | 38.76 | 50.22 |
| TEFLON | 1.01 | 6.96 | 9.10 |

The pasta obtained by extrusion through a die plate insert made of polyoxymethylene copolymer according to Example 2 had a roughness Ra equal to 6.83 µm, i.e. higher than the roughness value Ra calculated for the pasta according to the invention of Example 1a and markedly outside the roughness Ra range comprised between 3.5 µm and 6 µm.

As it is evident, the roughness value Ra calculated for the third variety of pasta not according to the invention of Example 2 is very far from the roughness value Ra calculated for the fourth variety of pasta not according to the invention of Example 2, indeed it has a roughness value Ra entirely comparable to the roughness value Ra calculated for the bronze-extruded pasta according to Example 1b.

In short, also in the light of the roughness tests carried out on the varieties of pasta obtained in Example 2, it can be stated that a pasta, obtained by a process which is similar to that according to the invention, but in which, in the step of mixing, a dough of durum wheat semolina and water is formulated, with a moisture content by weight lower than 35% by weight of the total weight of the dough, which does not show acceptable roughness features, i.e. it does not display an intermediate roughness between Teflon-extruded pasta and bronze-extruded pasta.

## Claims

1. A process for the production of a pasta food product, which comprises the following steps:
a) mixing water and a meal which is suitable for producing pasta, so as to obtain a dough with a water content comprised between 35% and 37.5% by weight of the total weight of said dough;
b) kneading said dough;
c) extruding said kneaded dough by extrusion through a die plate insert made of polyoxymethylene copolymer;
d) drying said extruded dough so as to obtain a pasta food product with a predetermined moisture content.

2. The process according to claim 1, wherein, in said step a) of mixing, said meal which is suitable for producing pasta is a cereal flour or semolina, preferably durum wheat semolina or semolato.

3. The process according to claim 1 or 2, wherein, in said step a) of mixing, a dough with a water content comprised between 36% and 37.1% by weight of the total weight of said dough, preferably comprised between 36.7% and 37% by weight of the total weight of said dough, is obtained.

4. The process according to any one of the preceding claims, wherein said step a) of mixing is carried out at a temperature comprised between 20°C and 50°C, preferably between 30°C and 40°C, for a time comprised between 20 minutes and 30 minutes.

5. The process according to any one of the preceding claims, wherein said step c) of extruding is carried out under partial vacuum conditions, preferably at a pressure comprised between -500 mmHg and -700 mmHg, more preferably between -600 mmHg and -670 mmHg.

6. The process according to any one of the preceding claims, wherein said step c) of extruding is carried out by means of an extruder comprising at least one endless screw, which is capable of moving the dough towards said die plate insert, wherein said at least one endless screw is rotated at a speed comprised between 15 rpm and 25 rpm.

7. The process according to any one of the preceding claims, wherein, in said step d) of drying, a pasta food product with a moisture content lower or equal to 12.5% by weight, preferably comprised between 10% and 11% by weight of the total weight of said food product, is obtained.

8. The process according to any one of the preceding claims, wherein said step d) of drying is carried out at a temperature comprised between 50°C and 90°C, preferably between 70°C and 85°C.

9. The process according to any one of the preceding claims, wherein said step d) of drying is preceded by at least one step of partial surface drying during which said extruded dough is partially dried on its surface by application of a hot air flow, said hot air flow preferably having a temperature comprised between 50°C and 90°C.

10. A pasta food product obtainable by the process according to any one of the preceding claims, having a surface roughness Ra comprised between 3.5 µm and 6 µm, preferably between 4.5 µm and 5.7 µm, calculated in accordance with the procedure ISO 16610-21, wherein said pasta food product is dried pasta having a moisture content lower or equal to 12.5% by weight on its total weight.

11. The pasta food product according to claim 10, wherein said pasta food product has a moisture content comprised between 10% and 12%, preferably comprised between 10% and 11%, by weight on its total weight.

12. The pasta food product according to claim 10 or 11, wherein said pasta food product is durum wheat semolina dried pasta.

## Patentansprüche

1. Verfahren zur Herstellung eines Pasta-Nahrungsmittelprodukts, das die folgenden Schritte umfasst:
a) Mischen von Wasser und einem zur Herstellung von Pasta geeigneten Mehl, um einen Teig mit einem Wassergehalt zwischen 35 und 37,5 Gew.-% des Gesamtgewichts des Teigs zu erhalten;
b) Kneten des Teigs;
c) Extrudieren des gekneteten Teigs durch Extrusion durch einen Düsenplatteneinsatz aus Polyoxymethylen-Copolymer;
d) Trocknen des extrudierten Teigs, um ein Pasta-Nahrungsmittelprodukt mit einem vorbestimmten Feuchtigkeitsgehalt zu erhalten.

2. Verfahren nach Anspruch 1, wobei das in dem Schritt a) des Mischens das für die Herstellung von Pasta geeignete Mehl ein Getreidemehl oder Grieß, vorzugsweise Hartweizengrieß oder Semolato, ist.

3. Verfahren nach Anspruch 1 oder 2, wobei in dem Schritt a) des Mischens ein Teig mit einem Wassergehalt von zwischen 36 und 37,1 Gew.-% des Gesamtgewichts des Teigs, vorzugsweise zwischen 36,7 und 37 Gew.-% des Gesamtgewichts des Teigs, erhalten wird.

4. Verfahren nach einem der vorhergehenden Ansprüche, wobei der Schritt a) des Mischens bei einer Temperatur zwischen 20°C und 50°C, vorzugsweise zwischen 30°C und 40°C, für eine Zeit zwischen 20 Minuten und 30 Minuten durchgeführt wird.

5. Verfahren nach einem der vorhergehenden Ansprüche, wobei der Schritt c) des Extrudierens unter Teilvakuumbedingungen durchgeführt wird, vorzugsweise bei einem Druck zwischen -500 mmHg und -700 mmHg, besonders bevorzugt zwischen -600 mmHg und -670 mmHg.

6. Verfahren nach einem der vorhergehenden Ansprüche, wobei der Schritt c) des Extrudierens mit Hilfe eines Extruders durchgeführt wird, der mindestens eine Endlosschnecke umfasst, die in der Lage ist, den Teig in Richtung des Düsenplatteneinsatzes zu bewegen, wobei die mindestens eine Endlosschnecke mit einer Geschwindigkeit von zwischen 15 U/min und 25 U/min gedreht wird.

7. Verfahren nach einem der vorhergehenden Ansprüche, wobei in dem Schritt d) des Trocknens ein Pasta-Nahrungsmittelprodukt mit einem Feuchtigkeitsgehalt von höchstens 12,5 Gew.-%, vorzugsweise zwischen 10 und 11 Gew.-% des Gesamtgewichts des Nahrungsmittelprodukts, erhalten wird.

8. Verfahren nach einem der vorhergehenden Ansprüche, wobei der Schritt d) des Trocknens bei einer Temperatur zwischen 50°C und 90°C, vorzugsweise zwischen 70°C und 85°C, durchgeführt wird.

9. Verfahren nach einem der vorhergehenden Ansprüche, wobei dem Schritt d) des Trocknens mindestens ein Schritt des partiellen Oberflächentrocknens vorausgeht, bei dem der extrudierte Teig auf seiner Oberfläche durch Anwendung eines Heißluftstroms teilweise getrocknet wird, wobei der Heißluftstrom vorzugsweise eine Temperatur zwischen 50°C und 90°C hat.

10. Pasta-Nahrungsmittelprodukt, erhältlich durch das Verfahren nach einem der vorhergehenden Ansprüche, mit einer Oberflächenrauheit Ra zwischen 3,5 µm und 6 µm, vorzugsweise zwischen 4,5 µm und 5,7 µm, berechnet nach dem Verfahren ISO 16610-21, wobei das Pasta-Nahrungsmittelprodukt getrocknete Pasta mit einem Feuchtigkeitsgehalt von weniger oder gleich 12,5 Gew.-% des Gesamtgewichts ist.

11. Pasta-Nahrungsmittelprodukt nach Anspruch 10, wobei das Pasta-Nahrungsmittelprodukt einen Feuchtigkeitsgehalt zwischen 10 % und 12%, vorzugsweise zwischen 10 % und 11 %, bezogen auf das Gesamtgewicht, aufweist.

12. Pasta-Nahrungsmittelprodukt nach Anspruch 10 oder 11, wobei das Pasta-Nahrungsmittelprodukt getrocknete Hartweizengrießpasta ist.

## Revendications

1. Un procédé de fabrication d'un produit alimentaire de pâtes ("*pasta*"), qui comprend les étapes suivantes :
a) mélanger de l'eau et une farine adaptée à la fabrication de pâtes, de manière à obtenir une pâte dont la teneur en eau est comprise entre 35 % et 37,5 % en poids du poids total de ladite pâte ;
b) pétrir ladite pâte ;
c) extruder ladite pâte pétrie par extrusion à travers un insert formant plaque de filière en copolymère de polyoxyméthylène ;
d) sécher ladite pâte extrudée de manière à obtenir un produit alimentaire de pâtes avec une teneur en humidité prédéterminée.

2. Le procédé selon la revendication 1, dans lequel, dans ladite étape a) de mélange, ladite farine convenant à la fabrication de pâtes est une farine ou semoule de céréales, de préférence une semoule ("semola") de blé dur ou une semoule de blé dur moins raffinée ("semolato") .

3. Le procédé selon la revendication 1 ou la revendication 2, dans lequel, dans ladite étape a) de mélange, il est obtenu une pâte avec une teneur en eau comprise entre 36% et 37,1% en poids du poids total de ladite pâte, de préférence comprise entre 36,7% et 37% en poids du poids total de ladite pâte.

4. Le procédé selon l'une quelconque des revendications précédentes, dans lequel ladite étape a) de mélange est réalisée à une température comprise entre 20°C et 50°C, de préférence entre 30°C et 40°C, pendant une durée comprise entre 20 minutes et 30 minutes.

5. Le procédé selon l'une quelconque des revendications précédentes, dans lequel ladite étape c) d'extrusion est réalisée dans des conditions de vide partiel, de préférence à une pression comprise entre -500 mmHg et -700 mmHg, de façon encore préférée entre -600 mmHg et -670 mmHg.

6. Le procédé selon l'une quelconque des revendications précédentes, dans lequel ladite étape c) d'extrusion est réalisée au moyen d'une extrudeuse comprenant au moins une vis sans fin, qui est apte à déplacer la pâte vers ledit insert formant plaque de filière, ladite au moins une vis sans fin étant entraînée en rotation à une vitesse comprise entre 15 tr/min et 25 tr/min.

7. Le procédé selon l'une quelconque des revendications précédentes, dans lequel, dans ladite étape d) de séchage, il est obtenu un produit alimentaire de pâtes ayant une teneur en humidité inférieure ou égale à 12,5 % en poids, de préférence comprise entre 10 % et 11 % en poids du poids total dudit produit alimentaire.

8. Le procédé selon l'une quelconque des revendications précédentes, dans lequel ladite étape d) de séchage est mise en oeuvre à une température comprise entre 50°C et 90°C, de préférence entre 70°C et 85°C.

9. Le procédé selon l'une quelconque des revendications précédentes, dans lequel ladite étape d) de séchage est précédée d'au moins une étape de séchage partiel de surface au cours de laquelle ladite pâte extrudée est partiellement séchée à sa surface par application d'un flux d'air chaud, ledit flux d'air chaud ayant de préférence une température comprise entre 50°C et 90°C.

10. Un produit alimentaire de pâtes ("pasta") susceptible d'être obtenu par le procédé selon l'une quelconque des revendications précédentes, présentant une rugosité de surface Ra comprise entre 3,5 µm et 6 µm, de préférence entre 4,5µm et 5,7µm, calculée selon la procédure ISO 16610-21, ledit produit alimentaire de pâtes étant une pâte sèche ayant une teneur en humidité inférieure ou égale à 12,5 % en poids sur son poids total.

11. Le produit alimentaire de pâtes selon la revendication 10, ledit produit alimentaire de pâtes ayant une teneur en humidité comprise entre 10% et 12%, de préférence comprise entre 10% et 11%, en poids par rapport à son poids total.

12. Le produit alimentaire de pâtes selon la revendication 10 ou la revendication 11, ledit produit alimentaire de pâtes étant une pâte séchée de semoule de blé dur.
